# EUROPÄISCHE PATENTSCHRIFT

(11) **EP 0 431 101 B1**
(45) Veröffentlichungstag und Bekanntmachung des Hinweises auf die Patenterteilung: **11.08.1993**
(21) Anmeldenummer: 90908185.3
(22) Anmeldetag: 30.05.1990
(51) Int. Cl.: B60K 15/00, B60K 15/035, F02M 25/08

(54) **ENTLÜFTUNGSVORRICHTUNG FÜR EINEN KRAFTSTOFFTANK EINER BRENNKRAFTMASCHINE**
VENTILATION DEVICE FOR THE FUEL TANK OF AN INTERNAL-COMBUSTION ENGINE
DISPOSITIF DE MISE A L'AIR POUR UN RESERVOIR D'ESSENCE D'UN MOTEUR A COMBUSTION INTERNE

(30) Priorität: 28.06.1989 DE 3921080
(43) Veröffentlichungstag der Anmeldung: 12.06.1991
(73) Patentinhaber: ROBERT BOSCH GMBH, 70442 Stuttgart (DE)
(72) Erfinder: FRANZKE, Klaus, D-7250 Leonberg (DE)
(74) Vertreter: Knetsch, Manfred
(86) Internationale Anmeldenummer: DE9000404
(87) Internationale Veröffentlichungsnummer: WO9100192

(56) Entgegenhaltungen:
- EP-A- 360 428
- DE-A- 1 927 431
- US-A- 3 884 204
- US-A- 4 279 233
- US-A- 4 306 894

## Beschreibung

### Stand der Technik

Die Erfindung geht aus von einer Entlüftungsvorrichtung für einen Kraftstofftank einer Brennkraftmaschine der im Oberbegriff des Anspruchs 1 definierten Gattung und die bereits durch die DE-C-3 346 103 bekannt ist.

Eine solche Entlüftungsvorrichtungen dient dazu zu verhindern, daß im Kraftstofftank sich verflüchtigender Kraftstoff, sog. Kraftstoffdampf, der insbesondere beim Befüllen des Kraftstofftanks oder in der heißen Abstellphase der Brennkraftmaschine anfällt, nicht in die Atmosphäre entweicht, sondern im Kraftstoffdampffilter gespeichert wird. Im Betrieb der Brennkraftmaschine erfolgt dann eine Regeneration des Filters durch Spülung mit Frischluft, die vom Ansaugsystem der Brennkraftmaschine über den Kraftstoffilter angesaugt wird. Die mit Kraftstoff beladene Spülluft wird dann der Brennkraftmaschine zur Verbrennung dosiert zugeleitet (DE 33 46 103 C2, DE 38 02 664 C1).

In USA sollen solche Entlüftungsvorrichtungen zum Beweis ihrer Leistungsfähigkeit einem sog. "On-Board Refueling Test" ausgesetzt werden, bei welchem ein festgesetzter Grenzwert für die mit der Verflüchtigung von Kraftstoff freigesetzten Kohlenwasserstoffe eingehalten werden muß. Bei einem solchen Test wird ausgehend von einem vollbeladenen Kraftstoffdampffilter eine Anzahl von Betriebszyklen der Brennkraftmaschine mit dazwischenliegenden Abstellphasen durchgeführt. Nach der letzten Abstellphase wird der Kraftstofftank befüllt. Die dabei am Filterausgang gemessenen Kohlenwasserstoffwerte müssen unter dem Grenzwert liegen.

Um bei noch akzeptablem Volumen des Kraftstoffdampffilters diesen Grenzwert einhalten zu können, ist es erforderlich, den in Abstellphasen der Brennkraftmaschine anfallenden Kraftstoffdampf während der Betriebsphasen der Brennkraftmaschine wieder zu entfernen, um somit am Ende der Testzyklen einen Beladungszustand des Kraftstoffdampffilters zu erreichen, in welchem dieser noch in der Lage ist, die beim Betanken anfallenden Kraftstoffdampfmenge zuverlässig zu absorbieren. Die bei der Regeneration des Kraftstoffilters zur Abfuhr einer bestimmten Kraftstoffdampfmasse erforderliche Spülluftmenge nimmt mit wachsender Entladung des Kraftstoffdampffilters, also mit abnehmendem Beladungsgrad des Kraftstoffdampffilters, exponentiell zu. Das bedeutet, daß bei dem relativ geringen Beladungszustand, den der Kraftstoffdampffilter während einer Abstellphase der Brennkraftmaschine innerhalb der Testzyklen erreicht, in der nachfolgenden Betriebsphase der Brennkraftmaschine eine sehr große Spülluftmenge erforderlich ist, um den Kraftstoffdampf wieder aus dem Filter zu entfernen.

### Vorteile der Erfindung

Die erfindungsgemäße Entlüftungsvorrichtung mit den kennzeichnenden Merkmalen des Anspruchs 1 hat demgegenüber den Vorteil, daß unter Beibehaltung eines relativ kleinen Gesamtfiltervolumens die zur Regeneration des Kraftstoffdampffilters in den Betriebsphasen der Brennkraftmaschine erforderliche Spülluftmenge gering ist. Die Unterteilung des Filters in die beiden Filterteile eröffnet die Möglichkeit, den ersten Filterteil recht klein zu machen, so daß er in jeder Abstellphase der Brennkraftmaschine einen sehr hohen Beladungsgrad erreicht und damit mit einer nur geringen Spülluftmenge zuverlässig und sicher während der nachfolgenden Betriebsphase der Brennkraftmaschine wieder entladen werden kann. Der zweite Filterteil ist dann ausreichend groß zu bemessen, so daß er am Ende der mit einer Abstellphase der Brennkraftmaschine abschließenden Testzyklen - und damit voll beladenem ersten Filterteil - das beim Betanken anfallende Kraftstoffdampfvolumen absorbieren kann. Die diffusionshindernde Verbindung zwischen den beiden Filterteilen sorgt dafür, daß Kraftstoffdampf bereits nicht schon dann in den zweiten Filterteil gelangt, wenn der erste Filterteil noch nicht maximal beladen ist, und es somit zu einer frühzeitigen geringen Beladung des zweiten Filterteils kommt, die wegen der geringen Spülluftmenge während der einzelnen Testzyklen nicht entfernbar ist. Die Spülluft wird immer über den Ausgang des zweiten Filterteils angesaugt und durchströmt die beiden Filterteile in umgekehrter Richtung wie der Kraftstoffdampf, um dann kraftstoffbeladen über das Ansaugsystem der Brennkraftmaschine in deren Brennkammer zu gelangen.

Durch die in den weiteren Ansprüchen aufgeführten Maßnahmen sind vorteilhafte Weiterbildungen und Verbesserungen der im Anspruch 1 angegebenen Entlüftungsvorrichtung möglich.

Das Volumen des ersten Filterteils ist zweckmäßig an die Bedingungen des vorgegebenen Testes zur Erprobung der Leistungsfähigkeit der Entlüftungsvorrichtung anzupassen, so daß in jedem Testzyklus der erste Filterteil durch die anfallende Kraftstoffmenge einen sehr hohen, nahezu maximalen Beladungszustand erreicht, der im nachfolgenden Testzyklus mit geringer Spülluft wieder vollständig abgebaut wird, bevor am Ende dieses nachfolgenden Testzyklus in der Abstellphase der Brennkraftmaschine dieser Beladungszustand wieder erreicht wird. Am Ende des letzten Testzyklus ist der erste Filterteil bis zur Sättigung beladen. Das Volumen des zweiten Filterteil ist so zu bemessen, daß es - bei völlig gesättigtem und damit nicht mehr aufnahmefähigen ersten Filterteil - die beim Füllen des Kraftstofftanks unter Testbedingungen anfallenden Mengen an verflüchtigtem Kraftstoff unter Erreichen eines großen Sättigungsgrades binden kann.

Die beiden Filterteile werden gemäß einer bevorzugten Ausführungsform der Erfindung in getrennten Behältern untergebracht, die diffusionshindernd miteinander verbunden sind. Dies hat den Vorteil, daß der recht kleine erste Filterteil im Motorraum angeordnet werden kann, um so unterstützende Maßnahmen zur Regeneration oder Desorption des Kraftstoffdampffilters, z.B. Beheizen, leicht verwirklichen zu können. Die beiden Filterteile können aber auch zusammen mit der diffusionshindernden Verbindung in einem einzigen Behälter untergebracht werden.

Die diffusionshindernde Verbindung zwischen den beiden Filterteilen kann in verschiedener Weise ausgeführt werden.

Gemäß einer bevorzugten Ausführungsform der Erfindung wird sie durch ein längeres Rohr realisiert. Es ist aber auch möglich, diese Verbindung durch ein Magnetventil oder unterdruckgesteuertes Ventil herzustellen, das bei Betrieb der Brennkraftmaschine geöffnet wird und so die beiden Filterteile miteinander verbindet. Im Sperrzustand des Magnetventils während der Abstellphasen der Brennkraftmaschine öffnet das Magnetventil in Richtung vom ersten zum zweiten Filterteil oberhalb eines Druckes, der unterhalb des Befüllungsdrucks beim Betanken des Kraftstofftanks liegt.

### Zeichnung

Die Erfindung ist anhand von in der Zeichnung dargestellten Ausführungsbeispielen in der nachfolgenden Beschreibung näher erläutert. Es zeigen jeweils in schematischer Darstellung:
- Fig. 1: eine an einen Kraftstofftank einer Brennkraftmaschine angeschlossene Entlüftungsvorrichtung,
- Fig. 2: eine Entlüftungsvorrichtung gemäß einem zweiten Ausführungsbeispiel.

### Beschreibung der Ausführungsbeispiele

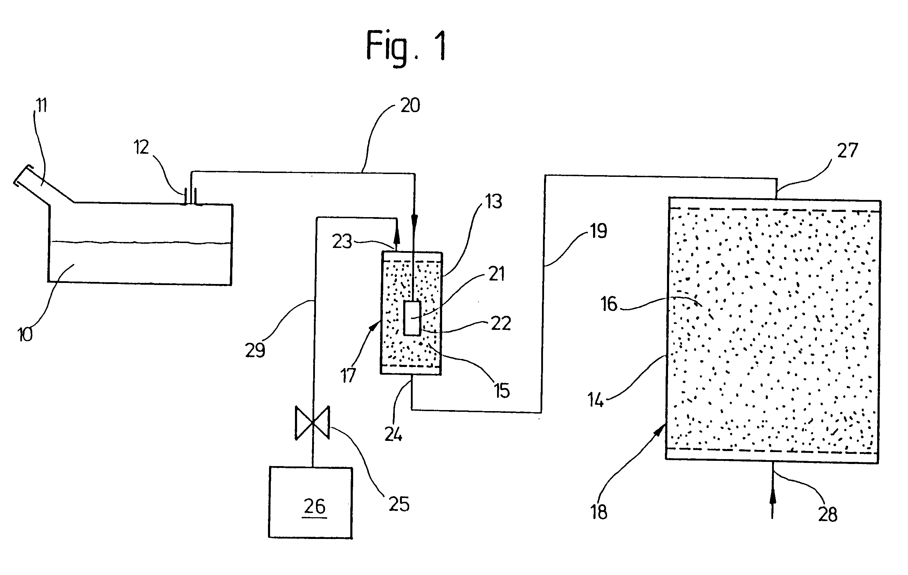

In Fig. 1 ist mit 10 ein Kraftstofftank bezeichnet, der einen Kraftstoff-Einfüllstutzen 11 und einen Entlüftungsstutzen 12 trägt, die an dessen Oberseite angeordnet sind. Die nur schematisch skizzierte Entlüftungsvorrichtung für den Kraftstofftank 10 weist zwei Behälter 13,14 auf, die jeweils mit Aktivkohle 15,16 gefüllt sind. Die mit Aktivkohle 15,16 gefüllten Behälter 13,14 bilden zwei Filterteile 17,18 eines Aktivkohlefilters, in welchem im Kraftstofftank 10 sich verflüchtigender Kraftstoff gebunden werden kann. Die beiden Behälter 13,14 sind durch ein längeres Rohr 19 miteinander verbunden, das eine Diffusion von Kraftstoff aus dem ersten Filterteil 17 zu dem zweiten Filterteil 18 verhindert. Der erste Behälter 13 ist über eine Entlüftungsleitung 20 an den Entlüftungsstutzen 12 des Kraftstofftanks 10 angeschlossen. Die Entlüftungsleitung 20 mündet im Innern eines im Behälter 13 zentral angeordneten Hohlraums 21, der innerhalb der Aktivkohle 15 mittels eines zylinderförmigen Siebs 22 gebildet ist. Auf gegenüberliegenden Stirnseiten des Behälters 13 ist ein Eingang 23 und ein Ausgang 24 vorgesehen. Während am Ausgang 24 das Rohr 19 angeschlossen ist, ist der Eingang 23 mittels einer Absaugleitung 29 über eine Spülluftsteuerung 25 mit dem Ansaugsystem 26 der Brennkraftmaschine verbunden. Die Spülluftsteuerung 25 dient zum dosierten Zumischen von mit Kraftstoff beladener Spülluft zum Kraftstoff-Luft-Gemisch der Brennkraftmaschine. Ein Beispiel einer Spülluftsteuerung ist in der DE 38 02 664 C1 beschrieben. Der vollständig mit Aktivkohle 15 gefüllte Behälter 14 weist ebenfalls an gegenüberliegenden Stirnseiten einen Eingang 27 und einen Ausgang 28 auf. Der Eingang 27 ist mit dem Rohr 19 verbunden und der Ausgang 28 dient dem Eintritt von Spülluft.

Ein sog. "On-Board Refueling Test" besteht aus drei Testzyklen und einer anschließenden Aufheizung des Tanks um einen definierten Betrag.Diese Prozedur wird dreimal hintereinander durchgeführt. Am Ende des Tests erfolgt eine Befüllung des Tanks mit einer bestimmten Menge Kraftstoff. Jeder Testzyklus umfaßt eine Betriebsphase der Brennkraftmaschine unter vorgegebenen Bedingungen und eine sich daran anschließende einstündige Abstellphase der Brennkraftmaschine. Das Volumen der Aktivkohle 15 im Behälter 13 ist nun so dimensioniert, daß am Ende eines jeden Testzyklus der Filterteil 17 einen sehr hohen Beladungszustand erreicht. In der Betriebsphase des folgenden Betriebszyklus wird der Behälter 13 zunächst mit Frischluft gespült und damit die Aktivkohle 15 regeneriert, um dann in der Abstellphase der Brennkraftmaschine wieder mit Kraftstoffdampf beladen zu werden. Am Ende des dritten Testzyklus ,d.h.nach der Aufheizung,ist der Filterteil 17 gerade bis zum Sättigungsgrad mit Kraftstoffdampf beladen.Das Rohr 19 verhindert daß während dieser drei Testzyklen Kraftstoffdampf durch Diffusion au dem Behälter 13 in den Behälter 14 gelangt. Das Volumen der Aktivkohle 16 in dem Behälter 14 ist so dimensioniert, daß der nach den 3 x 3 Testzyklen beim Befüllen des Tanks anfallende Kraftstoffdampf den Filterteil 18 gerade bis zum Sättigungsgrad auflädt.

In jeder Betriebsphase der Brennkraftmaschine wird von dem Ansaugsystem 26 ein Saugdruck erzeugt, wodurch Spülluft über den Ausgang 28 des Behälters 14 eintritt, die Aktivkohle 16, das Rohr 19 und die Aktivkohle 15 im Behälter 13 durchströmt, um schließlich kraftstoffbeladen über den Spülluftsteuerung 25 dosiert in das Ansaugsystem 26 der Brennkraftmaschine zu gelangen. Dabei wird die Aktivkohle 15 und 16 in beiden Behältern 13,14 regeneriert, so daß der aus dem Filterteil 17,18 bestehende Kraftstoffdampffilter in folgenden Abstellphasen der Brennkraftmaschine in der Lage ist, den sich verflüchtigenden Kraftstoff, einschließlich der beim Betanken anfallenden Kraftstoffdampfmenge, zu absorbieren und damit ein Entweichen in die Atmosphäre zu verhindern.

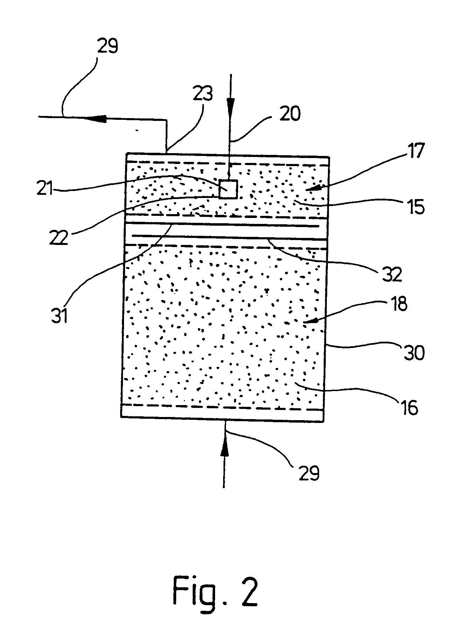

Bei der in Fig. 2 schematisch dargestellten Entlüftungsvorrichtung sind die beiden Filterteile 17,18 in einem einzigen Behälter 30 zusammengefaßt. Der volumenkleinere erste Filterteil 17 ist von dem volumengrößeren zweiten Filterteil 18 räumlich abgetrennt, wobei die Trennwände 31,32 so in den Behälter 30 eingebaut sind, daß eine mäanderförmige Verbindung zwischen den beiden Filterteilen 17,18 entsteht. Im übrigen ist Aufbau und Wirkungsweise dieser Entlüftungsvorrichtung identisch wie zu Fig. 1 beschrieben.

Die Erfindung ist nicht auf die vorstehend beschriebenen Ausführungsbeispiele beschränkt. So kann die einen Kraftstoffübertritt vom Filterteil 17 zum Filterteil 18 durch Diffusion verhindernde Verbindung vielfältig ausgebildet sein. In Fig. 1 ist sie durch ein längeres Rohr 19, in Fig. 2 durch eine mittels Trennwänden 31,32 hergestellte mäanderförmige Verbindung realisiert.Sie kann aber auch durch ein Magnetventil oder unterdruckgesteuertes Ventil vorgenommen werden, das immer dann geöffnet ist, wenn die Brennkraftmaschine sich in ihrer Betriebsphase befindet. In der Abstellphase der Brennkraftmaschine ist das Magnetventil geschlossen, ist jedoch so ausgebildet, daß es oberhalb eines Druckes, der wenig unterhalb des Befüllungsdruckes beim Betanken des Kraftstofftanks liegt, in Richtung vom ersten Filterteil 17 zum zweiten Filerteil 18 hin öffnet.

## Patentansprüche

1. Entlüftungsvorrichtung für einen Kraftstofftank (10) einer Brennkraftmaschine mit einer Entlüftungsleitung (20), die einen Entlüftungsstutzen (12) des Kraftstofftanks (10) über einen Kraftstoffdampffilter (17, 18) mit Speicherwirkung für Kohlenwasserstoffe, insbesondere Aktivkohlefilter (15, 16), mit Atmosphäre verbindet, und mit einer zum Ansaugsystem (26) der Brennkraftmaschine führenden Absaugleitung (29), die am Kraftstoffdampffilter (17) angeschlossen ist, dadurch gekennzeichnet, daß der Kraftstoffdampffilter in einen volumenkleinen ersten Filterteil (17) und in einen volumengroßen zweiten Filterteil (18) unterteilt ist und daß die beiden Filterteile (17, 18) direkt mittels einer den Kraftstoffübertritt infolge Diffusion hindernden Verbindung (19; 31, 32) miteinander verbunden und im Kraftstoffdampfstrom derart hintereinander angeordnet sind, daß Entlüftungs- und Absaugleitung (20, 29) am ersten Filterteil (17) angeschlossen sind und die Verbindung zur Atmosphäre am Ausgang des zweiten Filterteils (18) besteht.

2. Vorrichtung nach Anspruch 1, dadurch gekennzeichnet, daß die diffusionshindernde Verbindung der beiden Filterteile (17,18) durch ein längeres Rohr (19) hergestellt ist.

3. Vorrichtung nach Anspruch 1, dadurch gekennzeichnet, daß die diffusionshindernde Verbindung durch ein Magnetventil vorgenommen ist, das bei Betrieb der Brennkraftmaschine geöffnet ist und im Sperrzustand zumindest in Richtung vom ersten zum zweiten Filterteil (17,18) oberhalb eines Druckes öffnet, der unterhalb des Befüllungsdruckes bei Betanken des Kraftstofftanks (10) liegt.

4. Vorrichtung nach einem der Ansprüche 1 - 3, dadurch gekennzeichnet, daß das Volumen des ersten Filterteils (17) so bemessen ist, daß nach Abschluß einer vorgeschriebenen Testroutine, bestehend aus zeitlichen Phasen des Betriebs und des Abstellens der Brennkraftmaschine, der erste Filterteil (17) mit Kraftstoffdampf bis zur Sättigung beladen ist, und daß das Volumen des zweiten Filterteils (18) so bemessen ist, daß die beim Befüllen des Kraftstofftanks (10) verdampfende Kraftstoffmenge von diesem unter Erreichen eines hohen Beladungsgrades absorbiert werden kann.

5. Vorrichtung nach einem der Ansprüche 1 - 4, dadurch gekennzeichnet, daß jeder Filterteil (17,18) in einem Behälter (13,14) untergebracht ist und daß die diffusionshindernde Verbindung (19) zwischen den Behältern (13,14) hergestellt ist.

6. Vorrichtung nach einem der Ansprüche 1 - 4, dadurch gekennzeichnet, daß die beiden Filterteile (17,18) einschließlich der diffusionshindernden Verbindung (31,32) in einem einzigen Behälter (30) untergebracht sind.

## Claims

1. Ventilation device for a fuel tank (10) of an internal combustion engine, having a ventilation conduit (20) which connects a ventilation connection (12) of the fuel tank (10) to atmosphere via a fuel vapour filter (17, 18) with storage effect for hydrocarbons, in particular an active carbon filter (15, 16), and having a suction conduit (29) which leads to the induction system (26) of the internal combustion engine and is connected to the fuel vapour filter (17), characterised in that the fuel vapour filter is subdivided into a small-volume first filter part (17) and a large-volume second filter part (18) and that the two filter parts (17, 18) are directly connected to one another, by means of a connection (19; 31, 32) which prevents fuel transfer due to diffusion, and are located in series in the fuel vapour flow in such a way that the ventilation and suction conduits (20, 29) are connected to the first filter part (17) and the connection to atmosphere occurs at the outlet from the second filter part (18).

2. Device according to Claim 1, characterised in that the connection between the two filter parts (17, 18) which prevents diffusion is made by means of a relatively long tube (19).

3. Device according to Claim 1, characterised in that the connection which prevents diffusion is carried out by means of a solenoid valve which is open during operation of the internal combustion engine and, in the shut-off condition, opens, at least in the direction from the first filter part to the second filter part (17, 18), above a pressure which is below the filling pressure occurring when the fuel tank (10) is filled.

4. Device according to one of Claims 1-3, characterised in that the volume of the first filter part (17) is dimensioned in such a way that after the conclusion of a specified test routine, consisting of the operating and shut-down time phases of the internal combustion engine, the first filter part (17) is charged with fuel vapour up to saturation, and that the volume of the second filter part (18) is dimensioned in such a way that when the fuel tank (10) is being filled, fuel quantities evaporating from the latter can be absorbed, a high degree of charge of the second filter part (18) being reached in the process.

5. Device according to one of Claims 1-4, characterised in that each filter part (17, 18) is accommodated in a container (13, 14) and that the connection (19) which prevents diffusion is made between the containers (13, 14).

6. Device according to one of Claims 1-4, characterised in that the two filter parts (17, 18), including the connection (31, 32) which prevents diffusion, are accommodated in a single container (30).

## Revendications

1. Dispositif de réglage pour un réservoir de carburant (10) d'un moteur à combustion interne avec une canalisation de dégazage (20), qui relie à l'atmosphère un ajutage de dégazage (12) du réservoir de carburant (10) via un filtre de vapeur de carburant (17, 18) avec une action de stockage pour les hydrocarbures, en particulier par des filtres (15, 16) à charbons actifs et gui est raccordé à une canalisation d'évacuation (29) conduisant au système d'aspiration (26) du moteur à combustion interne, canalisation (29) qui est raccordée au filtre de vapeur de carburant (17), dispositif de dégazage caractérisé en ce que le filtre de vapeur de carburant est subdivisé en une première partie de filtre (17) de petit volume et en une seconde partie de filtre de volume plus grand (18) et en ce que les deux parties de filtre (17, 18) sont reliées ensemble au moyen d'une liaison (19; ;31; 32) empêchant le passage au carburant par diffusion et sont disposées l'une derrière l'autre dans le courant de vapeur de carburant, de telle façon que les canalisations de dégazage et d'évacuation (20, 29) soient raccordées à la première partie de filtre (17) et que la liaison à l'atmosphère ait lieu à la sortie de la deuxième partie de filtre (18).

2. Dispositif de dégazage selon la revendication 1, caractérisé en ce que la liaison qui empêche la diffusion des deux parties de filtre (17, 18) est constituée par un tuyau assez long (19).

3. Dispositif de dégazage selon la revendication 1, caractérisé en ce que la liaison qui empêche la diffusion est constitue par une électrovanne, qui est ouverte quand le moteur à combustion interne est en marche et à l'état fermé s'ouvre au moins dans le sens allant de la première partie de filtre à la seconde partie de filtre (17, 18) au-dessus d'une pression, qui se situe en-dessous de la pression de remplissage lors du remplissage du réservoir de carburant (10).

4. Dispositif de dégazage selon l'une des revendications 1 à 3, caractérisé en ce que le volume de la première partie du filtre (17) est dimensionné de telle façon qu'à la fin d'un test de routine déjà décrit, consistant en des phases temporaires de marche et d'arrêt du moteur à combustion interne, la première partie du filtre (17) est chargée de vapeur de carburant jusqu'à saturation et en ce que le volume de la deuxième partie de filtre (18) est dimensionné de telle façon que la quantité de carburant vaporisée lors du remplissage du réservoir de carburant (10) puisse être absorbée par cette partie de filtre en atteignant un degré élevé de charge.

5. Dispositif de dégazage selon l'une des revendications 1 à 4, caractérisé en ce que chaque partie de filtre (17, 18) est logée dans un récipient (13, 14) et en ce que la liaison qui empêche la diffusion (19) est réalisée entre les récipients (13, 14).

6. Dispositif de dégazage selon l'une des revendications 1 à 4, caractérisé en ce que les deux parties de filtre (17, 18) y compris la liaison (31 32) empêchant la diffusion sont logées dans un seul récipient (30).
